# EUROPEAN PATENT APPLICATION

(11) **EP 4 451 740 A1**
(43) Date of publication of application: **23.10.2024**
(21) Application number: 23746321.1
(22) Date of filing: 20.01.2023
(51) Int. Cl.: H04W 40/02

(54) **PATH PREFERENCE DETERMINATION METHOD, TERMINAL AND NETWORK SIDE DEVICE**

(30) Priority: 27.01.2022 CN 202210103145
(71) Applicant: VIVO MOBILE COMMUNICATION CO., LTD., Dongguan, Guangdong 523863 (CN)
(72) Inventor: ZHANG, Yizhong, Dongguan, Guangdong 523863 (CN); WANG, Wen, Dongguan, Guangdong 523863 (CN)
(74) Representative: Murgitroyd & Company
(86) International application number: PCT/CN2023/073330
(87) International publication number: WO 2023/143442

(57) **Abstract**

This application discloses a path preference determining method, a terminal, and a network-side device, pertaining to the field of communication technologies. The path preference determining method of embodiments of this application includes: obtaining, by a first terminal, first information; and determining, by the first terminal, a path preference of a target application according to the first information.

## Description

### CROSS-REFERENCE TO RELATED APPLICATION

This application claims priority to Chinese Patent Application No. 202210103145.9, filed on January 27, 2022, and entitled "PATH PREFERENCE DETERMINING METHOD, TERMINAL, AND NETWORK-SIDE DEVICE", which is incorporated herein by reference in its entirety.

### TECHNICAL FIELD

This application pertains to the field of communication technologies, and specifically, relates to a path preference determining method, a terminal, and a network-side device.

### BACKGROUND

In a direct communication (direct communication) scenario, at present in related technologies, a terminal can merely select a path preference according to a policy update of a network-side device, and cannot perform optimization based on a specific scenario. For example, in a case that direct communication is triggered by an application of the terminal, the terminal can merely select a path preference according to a policy update of the network-side device, resulting in signaling overheads for the terminal to some extent, relatively high computing complexity for the terminal, and a long waiting time for a user.

### SUMMARY

Embodiments of this application provide a path preference determining method, a terminal, and a network-side device, so as to resolve the problem that a terminal can merely select a path preference according to a policy update of a network-side device, resulting in relatively high resource consumption and a relatively long time.

According to a first aspect, a path preference determining method is provided, applied to a first terminal, where the method includes:
obtaining, by a first terminal, first information; and
determining, by the first terminal, a path preference of a target application according to the first information.

According to a second aspect, a path preference determining method is provided, applied to a network-side device, and the method includes:
generating, by a network-side device, a path preference mapping rule list based on a path preference provided by an application server; and
sending, by the network-side device, the path preference mapping rule list to a terminal; where
the path preference mapping rule list includes path preference mapping rules and priority information corresponding to the path preference mapping rules, and each of the path preference mapping rules is used for indicating one path preference.

According to a third aspect, a path preference determining apparatus is provided, where the apparatus includes:
a first obtaining unit, configured to obtain first information; and
a first determining unit, configured to determine a path preference of a target application according to the first information.

According to a fourth aspect, a path preference determining apparatus is provided, where the apparatus includes:
a first generating unit, configured to generate a path preference mapping rule list based on a path preference provided by an application server; and
a first sending unit, configured to send the path preference mapping rule list to a terminal; where
the path preference mapping rule list includes path preference mapping rules and priority information corresponding to the path preference mapping rules, and each of the path preference mapping rules is used for indicating one path preference.

According to a fifth aspect, a terminal is provided, where the terminal includes a processor and a memory, and the memory stores a program or instructions executable on the processor. When the program or instructions are executed by the processor, the steps of the path preference determining method according to the first aspect are implemented.

According to a sixth aspect, a terminal is provided, including a processor and a communication interface, where the processor is configured to obtain first information; and determine a path preference of a target application according to the first information.

According to a seventh aspect, a network-side device is provided, where the network-side device includes a processor and a memory, and the memory stores a program or instructions executable on the processor. When the program or instructions are executed by the processor, the steps of the path preference determining method according to the second aspect are implemented.

According to an eighth aspect, a network-side device is provided, including a processor and a communication interface, where the processor is configured to generate a path preference mapping rule list based on a path preference provided by an application server; and the communication interface is configured to send the path preference mapping rule list to a terminal; where the path preference mapping rule list includes path preference mapping rules and priority information corresponding to the path preference mapping rules, and each of the path preference mapping rules is used for indicating one path preference.

According to a ninth aspect, a path preference determining system is provided, including: a terminal and a network-side device, where the terminal may be configured to perform the steps of the path preference determining method according to the first aspect, and the network-side device may be configured to perform the steps of the path preference determining method according to the second aspect.

According to a tenth aspect, a readable storage medium is provided, where a program or instructions are stored in the readable storage medium, and when the program or instructions are executed by a processor, the steps of the path preference determining method according to the first aspect are implemented, or the steps of the path preference determining method according to the second aspect are implemented.

According to an eleventh aspect, a chip is provided, where the chip includes a processor and a communication interface, the communication interface is coupled to the processor, and the processor is configured to run a program or instructions to implement the path preference determining method according to the first aspect or implement the path preference determining method according to the second aspect.

According to a twelfth aspect, a computer program/program product is provided, where the computer program/program product is stored in a storage medium, and the computer program/program product is executed by at least one processor to implement the steps of the path preference determining method according to the first aspect or the steps of the path preference determining method according to the second aspect.

In the embodiments of the application, the terminal obtains the first information and determines the path preference of the target application according to the first information, which can reduce signaling overheads and computing resources for the terminal, reduce computing complexity for the terminal, and shorten a waiting time for the user, in comparison with indicating the path preference of the application to the terminal through the policy update of the network-side device.

### BRIEF DESCRIPTION OF DRAWINGS

FIG. 1 is a block diagram of a wireless communication system to which the embodiments of this application are applicable;
FIG. 2 is a first schematic flowchart of a path preference determining method according to an embodiment of this application;
FIG. 3 is a schematic diagram of interaction of a path preference determining method according to an embodiment of this application;
FIG. 4 is a second schematic flowchart of a path preference determining method according to an embodiment of this application;
FIG. 5 is a first schematic structural diagram of a path preference determining apparatus according to an embodiment of this application;
FIG. 6 is a second schematic structural diagram of a path preference determining apparatus according to an embodiment of this application;
FIG. 7 is a schematic structural diagram of a communication device according to an embodiment of this application;
FIG. 8 is a schematic diagram of a hardware structure of a terminal for implementing the embodiments of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

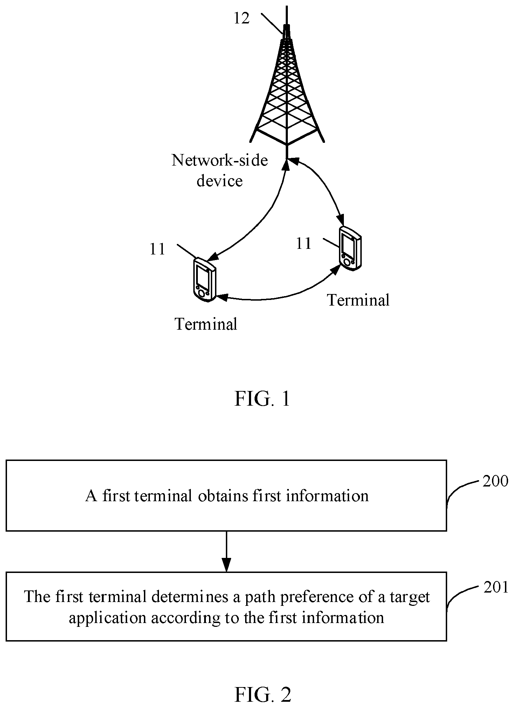

FIG. 1 is a block diagram of a wireless communication system to which the embodiments of this application are applicable. The wireless communication system includes a first terminal 11 and a network-side device 12. The first terminal 11 may be a first-terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian first terminal (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart band, smart clothing, and the like. It should be noted that a specific type of the first terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Device to device (Device to Device, D2D) communication means data transmission not passing through a base station, but allows one mobile terminal device to directly communicate with another mobile terminal device. Originating from the 4G era, D2D, referred to as an LTE proximity service (LTE Proximity Services, ProSe) technology, is a short-range communication technology based on a 3GPP communication system, and mainly includes two functions: direct discovery (Direct discovery) function, in which the terminal discovers terminals around that can be directly connected; and direct communication (Direct communication) function, for data interaction with surrounding terminals.

In the 4G era, D2D communication is mainly used in the field of public safety. In the 5G era, Internet of things applications such as Internet of vehicles, autonomous driving, and wearable devices will emerge in large numbers to further derive the 5G ProSe technology.

For 5G ProSe direct communication, it allows the terminal to perform data interaction with surrounding terminals. Such data interaction can not only be performed based on a conventional UE1-5G core network (5GC)-application server (Application Server)-UE2 path, but also include a direct communication mechanism based on a PC5 link.

In a scenario of 5G ProSe direct communication, if direct communication is triggered by an application of the terminal, the network-side device configures, for the terminal, a mapping rule (hereinafter referred to as a first mapping rule) between a path preference and a ProSe application or application identifier (ProSe identifier).

The first mapping rule is one mapping list containing several mapping rules, and each mapping rule may contain one of the following: a mapping relationship between a specific application identifier and a path preference (referred to as a first mapping relationship), and a mapping relationship between all applications and a path preference (referred to as a second mapping relationship).

The terminal may select a path preference according to the first mapping rule configured by the network-side device.

If the application also has a path preference, how to indicate the path preference of the application to the terminal can be implemented only though a policy update of the network-side device in related technologies at present, that is, the network-side device updates the first mapping rule according to requirements of the application layer, and includes the second mapping relationship into the first mapping rule and sends the first mapping rule to the terminal, resulting in signaling overheads for the terminal to some extent. In addition, if the terminal is configured with both the first mapping relationship and the second mapping relationship, the terminal may need to perform matching on all path preference mapping rules before determining a path preference to be applied, which is unfriendly to the terminal, because in a case of a large number of path preference mapping rules, the terminal needs to perform some unnecessary matching to finally determine one path preference, resulting in a waste of computing resources of the terminal, relatively high computing complexity of the terminal, and a relatively long waiting time for the user.

To resolve the above problems, the embodiments of the application provide a path preference determining method. The following describes in detail a path preference determining method provided in the embodiments of this application by using some embodiments and application scenarios thereof with reference to the accompanying drawings.

FIG. 2 is a first schematic flowchart of a path preference determining method according to an embodiment of this application. As shown in FIG. 2, the path preference determining method includes the following steps:
Step 200: A first terminal obtains first information.

It should be noted that the first information is used to indicate a path preference.

The path preference indicates a preferred path for communication between terminals.

Optionally, the path preference includes at least one of the following: preference for PC5, preference for Uu, and no preference.

If the path preference is preference for PC5, a data flow direction uses a PC5 mechanism, that is, a PC5 link (link) between the first terminal and a second terminal is established, and data is transmitted through the PC5 link.

If the path preference is preference for Uu, a data flow direction uses a Uu mechanism, that is, the first terminal establishes a first PDU session and sends it to the application server through a data plane. The application server sends downlink data to the second terminal through a second PDU session established by the second terminal, thus implementing communication between the first terminal and the second terminal.

If the path preference is no preference, a data flow direction is determined based on implementation of the terminal, and communication between the first terminal and the second terminal can be implemented by using the PC5 mechanism or Uu mechanism.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in the embodiments of this application.

Step 201: The first terminal determines a path preference of a target application according to the first information.

After the first terminal obtains the first information, the first terminal can further determine the path preference of the target application according to the first information.

In this embodiment of the application, the terminal obtains the first information and determines the path preference of the target application according to the first information, which can reduce signaling overheads and computing resources for the terminal, reduce computing complexity for the terminal, and shorten a waiting time for the user, in comparison with indicating the path preference of the application to the terminal through the policy update of the network-side device.

In some embodiments, the first information includes at least one of the following:
a) First indication information, where the first indication information is used for indicating the path preference of the target application.

In an implementation, the obtaining, by a first terminal, first information includes:
obtaining, by a proximity service ProSe layer of the first terminal, the first indication information sent by an application layer (Application layer) or an upper layer (Upper layer) of the first terminal.

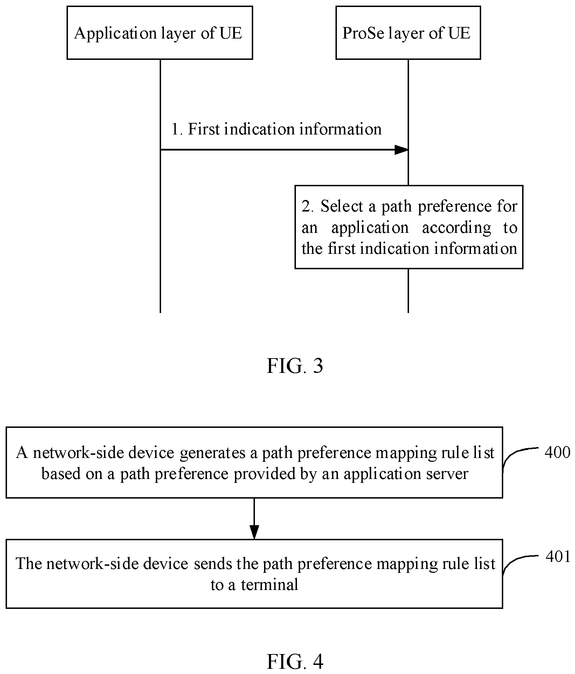

FIG. 3 is a schematic diagram of interaction of a path preference determining method according to an embodiment of this application.

It can be understood that the path preference of the target application can be indicated to the first terminal through inter-layer interaction between the ProSe layer and the application layer of the first terminal.

Further, after the ProSe layer of the first terminal obtains first indication information, the path preference of the target application is determined according to the first indication information.

If the first indication information indicates that the path preference of the target application is preference for PC5, the first terminal communicates with the second terminal by using a 5G ProSe direct communication mechanism on the PC5. If the first indication information indicates that the path preference of the target application is preference for Uu, the first terminal communicates with the second terminal by using a Uu mechanism. If the first indication information indicates that the path preference of the target application is no preference, which mechanism to be used depends on UE implementation. For example, the UE may select one path according to a path of the target application last time.

b) A path preference mapping rule list, where the path preference mapping rule list includes path preference mapping rules and priority information corresponding to the path preference mapping rules.

Each of the path preference mapping rules is used for indicating one path preference.

In some embodiments, each of the path preference mapping rules includes a mapping relationship between one path preference and one application, or a mapping relationship between one path preference and one application identifier, or a mapping relationship between one path preference and all applications.

Optionally, the path preference mapping rule list includes a first mapping relationship and a second mapping relationship.

The first mapping relationship is a mapping relationship between a specific application and a path preference. The second mapping relationship is a mapping relationship between all applications and a path preference.

That is, a mapping relationship between one path preference and one application or a mapping relationship between one path preference and one application identifier may be referred to as the first mapping relationship. A mapping relationship between one path preference and all applications may be referred to as the second mapping relationship.

It should be noted that a priority of the first mapping relationship is higher than that of the second mapping relationship. It is easy to understand, because the second mapping relationship is equivalent to one default mapping relationship being specified for all applications, that is, for example, all applications use preference for PC5 by default. When an application is additionally configured with one path preference (the first mapping relationship), a priority of this additional configuration (the first mapping relationship) should be higher than that of its default configuration (the second mapping relationship).

In this embodiment of this application, the path preference mapping rule list includes not only the path preference mapping rules, but also priority information corresponding to the path preference mapping rules. It can be understood that the terminal can obtain, through matching, the path preference of the target application more quickly according to the priority information of the path preference mapping rule, reducing computing resources of the terminal and decreasing the computing complexity.

Optionally, each of the path preference mapping rules further includes a second indication field, where the second indication field is used to indicate whether the path preference mapping rule contains an application identifier.

In a case that the second indication field is used to indicate that the path preference mapping rule contains no application identifier, the path preference mapping rule is used to indicate a mapping relationship between one path preference and all applications, that is, the path preference mapping rule reflects the second mapping relationship. For example, the path preference mapping rule is preference for PC5, which does not contain any application identifier, indicating that the path preference of all applications is preference for PC5.

In a case that the second indication field is used to indicate that the path preference mapping rule contains an application identifier, the path preference mapping rule is used to indicate a mapping relationship between one path preference and one application or a mapping relationship between one path preference and one application identifier.

In some embodiments, the obtaining, by a first terminal, first information includes:
receiving, by the first terminal, the path preference mapping rule list sent by a network-side device.

The network-side device generates a path preference mapping rule list based on a path preference provided by an application server, and the network-side device sends the path preference mapping rule list to the terminal.

Sending can also be understood as configuration.

Further, that the first terminal determines the path preference of the target application according to the first information includes:
obtaining, by the first terminal, a path preference matching an identifier of the target application according to the path preference mapping rule list and the priority information.

The path preference mapping rule list contains priority information in the following two manners:

In an implementation, the path preference mapping rule list includes: at least one path preference mapping rule sorted according to the priority information.

That is, the path preference mapping rule list delivered by the network-side device to the first terminal has been sorted; in other words, the network-side device has sorted the path preference mapping rules according to a specific priority order during coding of the path preference mapping rule list. After successfully obtaining one specific rule through matching, the terminal may stop matching on other path preference mapping rules, thereby reducing terminal computing resources, decreasing computing complexity, and reducing the waiting time of the user.

In an implementation, each of the path preference mapping rules has a first indication field, and the first indication field is used to indicate the priority information.

That is, each of the path preference mapping rules in the path preference mapping rule list sent to the first terminal by the network-side device contains the priority information of the path preference mapping rule.

Optionally, the terminal first performs matching on first-priority path preference mapping rules, then performs matching on second-priority path preference mapping rules, and so on.

New priority information is added to a coding policy of existing mapping rules, so as to reflect the priority of each of the path preference mapping rules. Another advantage of this is to be backward compatible with more future potential path selection policies.

In some embodiments, at least one application corresponds to one or more path preference mapping rules, or at least one application identifier corresponds to one or more path preference mapping rules.

It can be understood that at least one application may correspond to one path preference mapping rule or a plurality of path preference mapping rules.

At least one application identifier may correspond to one path preference mapping rule or a plurality of path preference mapping rules.

In some embodiments, in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

In a case that one application or application identifier corresponds to M path preference mapping rules, a priority of the application or the application identifier in the M path preference mapping rules is different. M is a positive integer greater than 1.

It can be understood that for a same application (application identifier), a priority of the application (application identifier) is different in each of the path preference mapping rules. The network-side device may configure a plurality of path preference mapping rules for a same application.

Optionally, a value of the priority information is a positive integer ranging from 0 to 255, where a larger value of the priority indicates a lower priority of the corresponding path preference mapping rule.

In some embodiments, after the path preference of the target application is determined, the method further includes:
in a case that the path preference of the target application is preference for PC5, performing, by the first terminal, communication with the second terminal by using a ProSe direct communication mechanism on PC5;
in a case that the path preference of the target application is preference for Uu, performing, by the first terminal, communication with the second terminal by using a Uu mechanism; and
in a case that the path preference of the target application is no preference, performing, by the first terminal, communication with the second terminal based on implementation of the first terminal.

FIG. 4 is a second schematic flowchart of a path preference determining method according to an embodiment of this application, including the following steps.

Step 400: A network-side device generates a path preference mapping rule list based on a path preference provided by an application server.

Optionally, the network-side device generates a path preference mapping rule list based on path preferences provided by an AF or an application server.

Step 401: The network-side device sends the path preference mapping rule list to a terminal.

The path preference mapping rule list includes path preference mapping rules and priority information corresponding to the path preference mapping rules, and each of the path preference mapping rules is used for indicating one path preference.

Optionally, the path preference includes at least one of the following: preference for PC5, preference for Uu, and no preference.

If the path preference is preference for PC5, a data flow direction uses a PC5 mechanism, that is, a PC5 link (link) between a first terminal and a second terminal is established, and data is transmitted through the PC5 link.

If the path preference is preference for Uu, a data flow direction uses a Uu mechanism, that is, the first terminal establishes a first PDU session and sends it to the application server through a data plane. The application server sends downlink data to the second terminal through a second PDU session established by the second terminal, thus implementing communication between the first terminal and the second terminal.

If the path preference is no preference, a data flow direction is determined based on implementation of the terminal, and communication between the first terminal and the second terminal can be implemented by using the PC5 mechanism or Uu mechanism.

In this embodiment of this application, the path preference mapping rule list sent by the network-side device to the terminal contains priority information, so as to enable the terminal to obtain the path preference more quickly through matching.

Optionally, each of the path preference mapping rules includes a mapping relationship between one path preference and one application, or a mapping relationship between one path preference and one application identifier, or a mapping relationship between one path preference and all applications.

In some embodiments, the path preference mapping rule list includes at least one path preference mapping rule sorted according to the priority information.

That is, the path preference mapping rule list delivered by the network-side device to the first terminal has been sorted; in other words, the network-side device has sorted the path preference mapping rules according to a specific priority order during coding of the path preference mapping rule list. After successfully obtaining one specific rule through matching, the terminal may stop matching on other path preference mapping rules, thereby reducing terminal computing resources, decreasing computing complexity, and reducing the waiting time of the user.

Optionally, that the network-side device generates the path preference mapping rule list based on the path preferences provided by the AF or the application server includes:
obtaining, by the network-side device, at least one path preference mapping rule based on the path preference provided by the application server;
configuring priority information corresponding to each of the path preference mapping rule; and
sorting the at least one path preference mapping rule according to the priority information corresponding to each of the path preference mapping rules to obtain the path preference mapping rule list.

In some embodiments, each of the path preference mapping rules has a first indication field, and the first indication field is used to indicate the priority information.

That is, each of the path preference mapping rules in the path preference mapping rule list sent to the first terminal by the network-side device contains the priority information of the path preference mapping rule. In this way, the terminal first performs matching on first-priority path preference mapping rules, then performs matching on second-priority path preference mapping rules, and so on.

New priority information is added to a coding policy of existing mapping rules, so as to reflect the priority of each of the path preference mapping rules. Another advantage of this is to be backward compatible with more future potential path selection policies.

Optionally, that the network-side device generates the path preference mapping rule list based on the path preferences provided by the AF or the application server includes:
obtaining, by the network-side device, at least one path preference mapping rule based on the path preference provided by the application server;
determining priority information corresponding to each of the path preference mapping rules; and
writing the priority information corresponding to each of the path preference mapping rules into a first indication field of each of the path preference mapping rules to obtain the path preference mapping rule list.

Optionally, at least one application corresponds to one or more path preference mapping rules, or at least one application identifier corresponds to one or more path preference mapping rules.

It can be understood that at least one application may correspond to one path preference mapping rule or a plurality of path preference mapping rules.

At least one application identifier may correspond to one path preference mapping rule or a plurality of path preference mapping rules.

Optionally, in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

In a case that one application or application identifier corresponds to M path preference mapping rules, a priority of the application or the application identifier in the M path preference mapping rules is different. M is a positive integer greater than 1.

It can be understood that for a same application (application identifier), a priority of the application (application identifier) is different in each of the path preference mapping rules. The network-side device may configure a plurality of path preference mapping rules for a same application.

Optionally, a value of the priority information is a positive integer ranging from 0 to 255, where a larger value of the priority indicates a lower priority of the corresponding path preference mapping rule.

In this embodiment of this application, the path preference mapping rule list sent by the network-side device to the terminal contains priority information, so as to enable the terminal to obtain the path preference more quickly through matching, thereby reducing terminal computing resources, decreasing computing complexity, and reducing the waiting time of the user.

Optionally, the application server sends a path preference to the terminal or the network-side device.

In an implementation, the application server sends a path preference to an application layer or upper layer of the terminal, and the application layer or upper layer of the terminal sends first indication information of a path to a ProSe layer of the terminal, and the first indication information indicates the path preference.

In an implementation, the application server sends a path preference to the network-side device. The network-side device generates a path preference mapping rule list based on the path preference provided by the application server, and sends the path preference mapping rule list to the terminal.

In the path preference determining method provided in the embodiments of this application, the execution subject may be a path preference determining apparatus. In the embodiments of this application, the path preference determining method being performed by the path preference determining apparatus is used as an example to describe the path preference determining apparatus provided in the embodiments of this application.

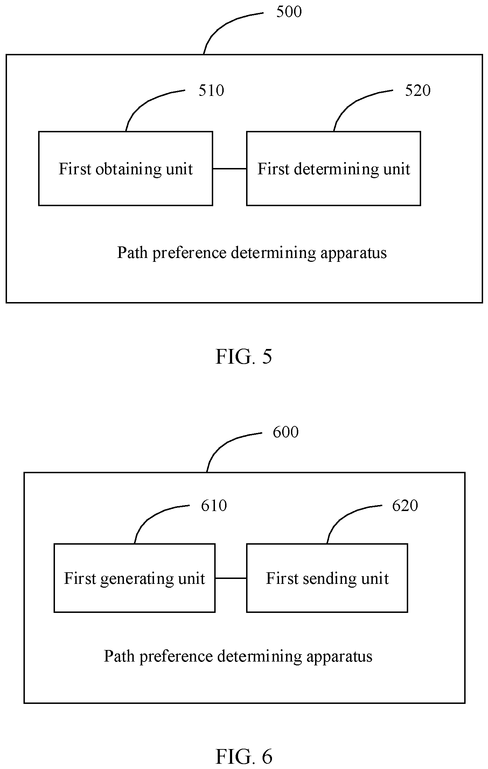

FIG. 5 is a first schematic structural diagram of a path preference determining apparatus according to an embodiment of this application. As shown in FIG. 5, the path preference determining apparatus 500 includes:
a first obtaining unit 510, configured to obtain first information; and
a first determining unit 520, configured to determine a path preference of a target application according to the first information.

In this embodiment of the application, the first information is obtained and the path preference of the target application is determined according to the first information, which can reduce signaling overheads and computing resources for the terminal, reduce computing complexity for the terminal, and shorten a waiting time for the user, in comparison with indicating the path preference of the application to the terminal through the policy update of the network-side device.

Optionally, the first information includes at least one of the following:
first indication information, where the first indication information is used for indicating the path preference of the target application; and
a path preference mapping rule list, where the path preference mapping rule list includes path preference mapping rules and priority information corresponding to the path preference mapping rules.

Each of the path preference mapping rules is used for indicating one path preference.

Optionally, each of the path preference mapping rules includes a mapping relationship between one path preference and one application, or a mapping relationship between one path preference and one application identifier, or a mapping relationship between one path preference and all applications.

Optionally, the first obtaining unit is configured to:
receive the path preference mapping rule list sent by a network-side device.

Optionally, the first determining unit is configured to:
obtain a path preference matching an identifier of the target application according to the path preference mapping rule list and the priority information.

Optionally, the path preference mapping rule list includes at least one path preference mapping rule sorted according to the priority information.

Optionally, each of the path preference mapping rules has a first indication field, and the first indication field is used to indicate the priority information.

Optionally, at least one application corresponds to one or more path preference mapping rules, or at least one application identifier corresponds to one or more path preference mapping rules.

Optionally, in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

Optionally, the first obtaining unit is configured to:
obtain, by using a proximity service ProSe layer, the first indication information sent by an application layer or an upper layer.

Optionally, the path preference includes at least one of the following: preference for PC5, preference for Uu, and no preference.

Optionally, the apparatus further includes a first communication unit configured to:
in a case that the path preference of the target application is preference for PC5, perform, for the first terminal, communication with the second terminal by using a ProSe direct communication mechanism on PC5;
in a case that the path preference of the target application is preference for Uu, perform, for the first terminal, communication with the second terminal by using a Uu mechanism; and
in a case that the path preference of the target application is no preference, perform, for the first terminal, communication with the second terminal based on implementation of the first terminal.

The path preference determining apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The path preference determining apparatus provided in this embodiment of this application is capable of implementing the processes implemented in the method embodiments in FIG. 2 and FIG. 3, with the same technical effects achieved. To avoid repetition, details are not described herein again.

FIG. 6 is a second schematic structural diagram of a path preference determining apparatus according to an embodiment of this application. As shown in FIG. 6, the path preference determining apparatus 600 includes:
a first generating unit 610, configured to generate a path preference mapping rule list based on a path preference provided by an application server; and
a first sending unit 620, configured to send the path preference mapping rule list to a terminal.

The path preference mapping rule list includes path preference mapping rules and priority information corresponding to the path preference mapping rules, and each of the path preference mapping rules is used for indicating one path preference.

Optionally, each of the path preference mapping rules includes a mapping relationship between one path preference and one application, or a mapping relationship between one path preference and one application identifier, or a mapping relationship between one path preference and all applications.

Optionally, the path preference mapping rule list includes at least one path preference mapping rule sorted according to the priority information.

Optionally, the first generating unit 610 is configured to:
obtain at least one path preference mapping rule based on the path preference provided by the application server;
configure priority information corresponding to each of the path preference mapping rule; and
sort the at least one path preference mapping rule according to the priority information corresponding to each of the path preference mapping rules to obtain the path preference mapping rule list.

Optionally, each of the path preference mapping rules has a first indication field, and the first indication field is used to indicate the priority information.

Optionally, the first generating unit 610 is configured to:
obtain at least one path preference mapping rule based on the path preference provided by the application server;
determine priority information corresponding to each of the path preference mapping rules; and
write the priority information corresponding to each of the path preference mapping rules into a first indication field of each of the path preference mapping rules to obtain the path preference mapping rule list.

Optionally, at least one application corresponds to one or more path preference mapping rules, or at least one application identifier corresponds to one or more path preference mapping rules.

Optionally, in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

Optionally, the path preference includes at least one of the following: preference for PC5, preference for Uu, and no preference.

In this embodiment of this application, the path preference mapping rule list sent to the terminal contains priority information, so as to enable the terminal to obtain the path preference more quickly through matching.

The path preference determining apparatus in this embodiment of the application may be an electronic device, such as an electronic device with an operating system, or a component in the electronic device, such as an integrated circuit or a chip. The electronic device may be a network-side device or other devices than the network-side device. For example, the network-side device may include, but is not limited to, the types of the network-side device 12 listed above, and other devices may be a server, a network attached storage (Network Attached Storage, NAS), and the like. This is not specifically limited in the embodiments of this application.

The path preference determining apparatus provided in this embodiment of this application is capable of implementing the processes implemented in the method embodiments in FIG. 4, with the same technical effects achieved. To avoid repetition, details are not described herein again.

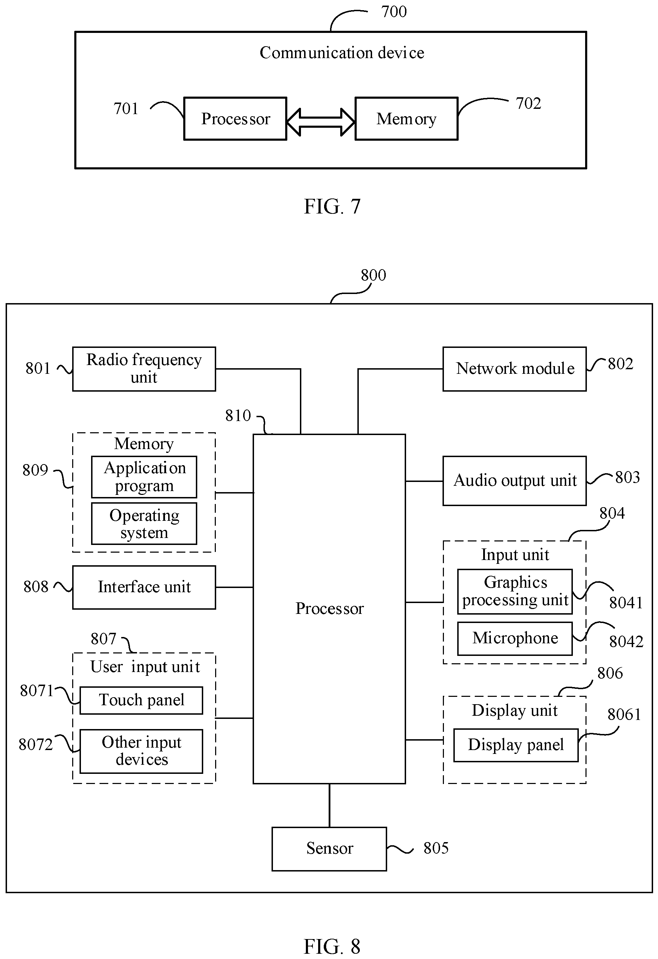

Optionally, as shown in FIG. 7, an embodiment of this application further provides a communication device 700, including a processor 701 and a memory 702, and the memory 702 stores a program or instructions executable on the processor 701. For example, when the communication device 700 is a first terminal and when the program or instructions are executed by the processor 701, the steps of the foregoing embodiments of the path preference determining method are implemented, with the same technical effects achieved. When the communication device 700 is a network-side device and when the program or instructions are executed by the processor 701, the steps of the foregoing embodiments of the path preference determining method are implemented, with the same technical effects achieved. To avoid repetition, details are not described herein again.

An embodiment of this application further provides a terminal, including a processor and a communication interface, and the processor is configured to: obtain first information; and determine a path preference of a target application according to the first information.

The terminal embodiments correspond to the foregoing terminal-side method embodiments, and the implementation processes and implementations of the foregoing method embodiments can be applied to the terminal embodiments, with the same technical effects achieved. Specifically, FIG. 8 is a schematic diagram of a hardware structure of a terminal for implementing the embodiments of this application.

The terminal 800 includes but is not limited to at least part of components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) supplying power to the components, and the power supply may be logically connected to the processor 810 through a power management system. In this way, functions such as charge management, discharge management, and power consumption management are implemented by using the power management system. The structure of the terminal shown in FIG. 8 does not constitute any limitation on the terminal. The terminal may include more or fewer components than shown in the figure, or a combination of some components, or the components disposed differently. Details are not described herein again.

It can be understood that in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, and the like. The user input unit 807 may include at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or a power on/off key), a trackball, a mouse, a joystick, and the like. Details are not described herein.

In this embodiment of this application, the radio frequency unit 801 receives downlink data from a network-side device, and then sends the downlink data to the processor 810 for processing. In addition, the radio frequency unit 801 may send uplink data to the network-side device. Generally, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may include a first storage area for storing a program or instructions and a second storage area for storing data. The first storage area may store an operating system, an application program or instruction required by at least one function (for example, a sound playback function or an image playback function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 809 in the embodiments of this application includes but is not limited to these and any other suitable types of memories.

The processor 810 may include one or more processing units. Optionally, an application processor and a modem processor may be integrated in the processor 810. This application processor primarily processes operations involving an operating system, user interfaces, application programs, and the like. The modem processor primarily processes radio communication signals, for example, being a baseband processor. It can be understood that the modem processor may alternatively be not integrated in the processor 810.

The processor 810 is configured to obtain first information; and determine a path preference of a target application according to the first information.

In this embodiment of the application, the first information is obtained and the path preference of the target application is determined according to the first information, which can reduce signaling overheads and computing resources for the terminal, reduce computing complexity for the terminal, and shorten a waiting time for the user, in comparison with indicating the path preference of the application to the terminal through the policy update of the network-side device.

Optionally, the first information includes at least one of the following:
first indication information, where the first indication information is used for indicating the path preference of the target application; and
a path preference mapping rule list, where the path preference mapping rule list includes path preference mapping rules and priority information corresponding to the path preference mapping rules.

Each of the path preference mapping rules is used for indicating one path preference.

In this embodiment of this application, the path preference mapping rule list includes not only the path preference mapping rules, but also priority information corresponding to the path preference mapping rules. The terminal can obtain, through matching, the path preference of the target application more quickly according to the priority information of the path preference mapping rule, reducing computing resources of the terminal and decreasing the computing complexity.

Optionally, each of the path preference mapping rules includes a mapping relationship between one path preference and one application, or a mapping relationship between one path preference and one application identifier, or a mapping relationship between one path preference and all applications.

Optionally, the processor 810 is configured to:
receive the path preference mapping rule list sent by a network-side device.

Optionally, the processor 810 is configured to:
obtain a path preference matching an identifier of the target application according to the path preference mapping rule list and the priority information.

Optionally, the path preference mapping rule list includes at least one path preference mapping rule sorted according to the priority information.

In this embodiment of this application, the path preference mapping rule list delivered by the network-side device to the first terminal has been sorted; in other words, the network-side device has sorted the path preference mapping rules according to a specific priority order during coding of the path preference mapping rule list. After successfully obtaining one specific rule through matching, the terminal may stop matching on other path preference mapping rules, thereby reducing terminal computing resources, decreasing computing complexity, and reducing the waiting time of the user.

Optionally, each of the path preference mapping rules has a first indication field, and the first indication field is used to indicate the priority information.

In this embodiment of this application, new priority information is added to a coding policy of existing mapping rules, so as to reflect the priority of each of the path preference mapping rules. Another advantage of this is to be backward compatible with more future potential path selection policies.

Optionally, at least one application corresponds to one or more path preference mapping rules, or at least one application identifier corresponds to one or more path preference mapping rules.

Optionally, in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

Optionally, the processor 810 is configured to:
obtain, by using a proximity service ProSe layer, the first indication information sent by an application layer or an upper layer.

Optionally, the path preference includes at least one of the following: preference for PC5, preference for Uu, and no preference.

Optionally, the radio frequency unit 801 is further configured to:
in a case that the path preference of the target application is preference for PC5, perform, for the first terminal, communication with the second terminal by using a ProSe direct communication mechanism on PC5;
in a case that the path preference of the target application is preference for Uu, perform, for the first terminal, communication with the second terminal by using a Uu mechanism; and
in a case that the path preference of the target application is no preference, perform, for the first terminal, communication with the second terminal based on implementation of the first terminal.

An embodiment of this application further provides a network-side device, including a processor and a communication interface, where the processor is configured to generate a path preference mapping rule list based on a path preference provided by an application server; and the communication interface is configured to send the path preference mapping rule list to a terminal; where the path preference mapping rule list includes path preference mapping rules and priority information corresponding to the path preference mapping rules, and each of the path preference mapping rules is used for indicating one path preference.

The network-side device embodiments correspond to the foregoing network-side device method embodiments, and the implementation processes and implementations of the foregoing method embodiments can be applied to the network-side device embodiments, with the same technical effects achieved.

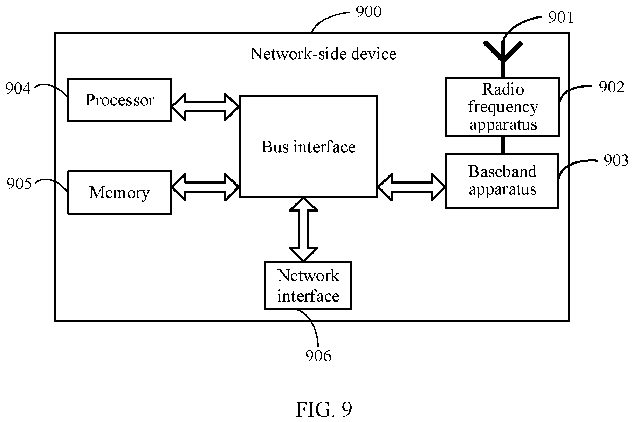

Specifically, an embodiment of this application further provides a network-side device. As shown in FIG. 9, the network-side device 900 includes an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes to-be-sent information, and sends the information to the radio frequency apparatus 902; and the radio frequency apparatus 902 processes the received information and then sends the information out by using the antenna 901.

The method executed by the network-side device in the foregoing embodiments can be implemented in the baseband apparatus 903, and the baseband apparatus 903 includes a baseband processor.

The baseband apparatus 903 may include, for example, at least one baseband board, where a plurality of chips are disposed on the baseband board. As shown in FIG. 9, one of the chips is, for example, a baseband processor, and is connected to the memory 905 through the bus interface, to invoke a program in the memory 905 to perform the operations of the network device shown in the foregoing method embodiments.

The network-side device may further include a network interface 906, where the interface is, for example, a common public radio interface (common public radio interface, CPRI).

Specifically, the network-side device 900 in this embodiment of the present invention further includes: instructions or a program stored in the memory 905 and executable on the processor 904. The processor 904 invokes the instructions or program in the memory 905 to execute the method executed by the modules shown in FIG. 6, with the same technical effects achieved. To avoid repetition, details are not repeated herein.

An embodiment of this application further provides a readable storage medium, where a program or an instruction is stored in the readable storage medium. When the program or the instruction is executed by a processor, the processes of the foregoing embodiment of the path preference determining method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing path preference determining method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing path preference determining method embodiments, with the same technical effects achieved. To avoid repetition, details are not repeated herein.

An embodiment of this application further provides a path preference determining system, including a terminal and a network-side device, where the terminal can be configured to execute the steps of the foregoing embodiments of the path preference determining method, and the network-side device can be configured to execute the steps of the foregoing embodiments of the path preference determining method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A path preference determining method, comprising:
obtaining, by a first terminal, first information; and
determining, by the first terminal, a path preference of a target application according to the first information.

2. The path preference determining method according to claim 1, wherein the first information comprises at least one of the following:
first indication information, wherein the first indication information is used for indicating the path preference of the target application; and
a path preference mapping rule list, wherein the path preference mapping rule list comprises path preference mapping rules and priority information corresponding to the path preference mapping rules; wherein
each of the path preference mapping rules is used for indicating one path preference.

3. The path preference determining method according to claim 2, wherein each of the path preference mapping rules comprises a mapping relationship between one path preference and one application, or a mapping relationship between one path preference and one application identifier, or a mapping relationship between one path preference and all applications.

4. The path preference determining method according to claim 2 or 3, wherein the obtaining, by a first terminal, first information comprises:
receiving, by the first terminal, the path preference mapping rule list sent by a network-side device.

5. The path preference determining method according to claim 4, wherein the determining, by the first terminal, a path preference of a target application according to the first information comprises:
obtaining, by the first terminal, a path preference matching an identifier of the target application according to the path preference mapping rule list and the priority information.

6. The path preference determining method according to any one of claims 2 to 5, wherein the path preference mapping rule list comprises at least one path preference mapping rule sorted according to the priority information.

7. The path preference determining method according to any one of claims 2 to 5, wherein each of the path preference mapping rules has a first indication field, and the first indication field is used for indicating the priority information.

8. The path preference determining method according to any one of claims 2 to 7, wherein at least one application corresponds to one or more path preference mapping rules, or at least one application identifier corresponds to one or more path preference mapping rules.

9. The path preference determining method according to claim 8, wherein in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

10. The path preference determining method according to claim 2, wherein the obtaining, by a first terminal, first information comprises:
obtaining, by a proximity service ProSe layer of the first terminal, the first indication information sent by an application layer or an upper layer of the first terminal.

11. The path preference determining method according to any one of claims 1 to 10, wherein the path preference comprises at least one of the following: preference for PC5, preference for Uu, and no preference.

12. The path preference determining method according to claim 11, wherein after the determining a path preference of a target application, the method further comprises:
in a case that the path preference of the target application is preference for PC5, performing, by the first terminal, communication with the second terminal by using a ProSe direct communication mechanism on PC5;
in a case that the path preference of the target application is preference for Uu, performing, by the first terminal, communication with the second terminal by using a Uu mechanism; and
in a case that the path preference of the target application is no preference, performing, by the first terminal, communication with the second terminal based on implementation of the first terminal.

13. A path preference determining method, comprising:
generating, by a network-side device, a path preference mapping rule list based on a path preference provided by an application server; and
sending, by the network-side device, the path preference mapping rule list to a terminal; wherein
the path preference mapping rule list comprises path preference mapping rules and priority information corresponding to the path preference mapping rules, and each of the path preference mapping rules is used for indicating one path preference.

14. The path preference determining method according to claim 13, wherein each of the path preference mapping rules comprises a mapping relationship between one path preference and one application, or a mapping relationship between one path preference and one application identifier, or a mapping relationship between one path preference and all applications.

15. The path preference determining method according to claim 13 or 14, wherein the path preference mapping rule list comprises at least one path preference mapping rule sorted according to the priority information.

16. The path preference determining method according to claim 15, wherein the generating, by a network-side device, a path preference mapping rule list based on a path preference provided by an application server comprises:
obtaining, by the network-side device, at least one path preference mapping rule based on the path preference provided by the application server;
configuring priority information corresponding to each of the path preference mapping rule; and
sorting the at least one path preference mapping rule according to the priority information corresponding to each of the path preference mapping rules to obtain the path preference mapping rule list.

17. The path preference determining method according to claim 13 or 14, wherein each of the path preference mapping rules has a first indication field, and the first indication field is used for indicating the priority information.

18. The path preference determining method according to claim 17, wherein the generating, by a network-side device, a path preference mapping rule list based on a path preference provided by an application server comprises:
obtaining, by the network-side device, at least one path preference mapping rule based on the path preference provided by the application server;
determining priority information corresponding to each of the path preference mapping rules; and
writing the priority information corresponding to each of the path preference mapping rules into a first indication field of each of the path preference mapping rules to obtain the path preference mapping rule list.

19. The path preference determining method according to any one of claims 13 to 18, wherein at least one application corresponds to one or more path preference mapping rules, or at least one application identifier corresponds to one or more path preference mapping rules.

20. The path preference determining method according to claim 19, wherein in a case that at least one application corresponds to a plurality of path preference mapping rules, or in a case that at least one application identifier corresponds to a plurality of path preference mapping rules, priorities of path preferences corresponding to the at least one application or application identifier in different path preference mapping rules are different.

21. The path preference determining method according to any one of claims 13 to 20, wherein the path preference comprises at least one of the following: preference for PC5, preference for Uu, and no preference.

22. A path preference determining apparatus, comprising:
a first obtaining unit, configured to obtain first information; and
a first determining unit, configured to determine a path preference of a target application according to the first information.

23. The path preference determining apparatus according to claim 22, wherein the first information comprises at least one of the following:
first indication information, wherein the first indication information is used for indicating the path preference of the target application; and
a path preference mapping rule list, wherein the path preference mapping rule list comprises path preference mapping rules and priority information corresponding to the path preference mapping rules; wherein
each of the path preference mapping rules is used for indicating one path preference.

24. The path preference determining apparatus according to claim 23, wherein the first obtaining unit is configured to:
receive the path preference mapping rule list sent by a network-side device.

25. The path preference determining apparatus according to claim 24, wherein the first determining unit is configured to:
obtain a path preference matching an identifier of the target application according to the path preference mapping rule list and the priority information.

26. The path preference determining apparatus according to claim 23, wherein the first obtaining unit is configured to:
obtain, by using a proximity service ProSe layer, the first indication information sent by an application layer or an upper layer.

27. A path preference determining apparatus, comprising:
a first generating unit, configured to generate a path preference mapping rule list based on a path preference provided by an application server; and
a first sending unit, configured to send the path preference mapping rule list to a terminal; wherein
the path preference mapping rule list comprises path preference mapping rules and priority information corresponding to the path preference mapping rules, and each of the path preference mapping rules is used for indicating one path preference.

28. A terminal, comprising a processor and a memory, wherein the memory stores a program or instructions executable on the processor, and when the program or the instructions are executed by the processor, the steps of the path preference determining method according to any one of claims 1 to 12 are implemented.

29. A network-side device, comprising a processor and a memory, wherein the memory stores a program or instructions executable on the processor, and when the program or the instructions are executed by the processor, the steps of the path preference determining method according to any one of claims 13 to 21 are implemented.

30. A readable storage medium, wherein the readable storage medium stores a program or instructions, and when the program or instructions are executed by a processor, the steps of the path preference determining method according to any one of claims 1 to 12 are implemented, or the steps of the path preference determining method according to any one of claims 13 to 21 are implemented.
